# EUROPEAN PATENT APPLICATION

(11) **EP 0 862 174 A1**
(43) Date of publication of application: **02.09.1998**
(21) Application number: 97250048.2
(22) Date of filing: 27.02.1997
(51) Int. Cl.: G11B 17/04, G11B 17/03

(54) **A disk loading device for an optical disk driver**

(71) Applicant: Lite-On Technology Corp., Taipei (TW)
(72) Inventor: Liao, Cheng-yao, Taichung City, Taiwan (TW); Huang, Hwei-chu, Hsih Chu Hsien, Taiwan (TW); Tsai, Jenn-shing, Ming Hu RD, Hsih Chu City, Taiwan (TW)
(74) Representative: UEXKÜLL & STOLBERG

(57) **Abstract**

The present invention relates to a disk loading means, wherein, when the optical disk driver is installed horizontally or vertically, the present invention will cause the optical disk to be steadily clamped by said optical disk driver in a radial direction so that the loading process will be successful, and when said optical disk driver is installed horizontally, said device will still provide convenient functions so that the tray may be used as a generally used optical disk tray.

## Description

### BACKGROUND OF THE INVENTION

### 1. Field of the Invention

The present invention relates to a disk loading device, particularly, to a disk loading device for an optical disk driver which is used to vertically install the optical disk (upright in one side).

### 2. Description of the Prior Art

In present optical data storage systems, various mediums or an optical disk can be used to store digital information. For example, 5.25 inch optical disks are used in standard optical disk systems, which optical disks may or may not be installed within a protective caddy. If said optical disk is not fixed within a protective caddy, the optical disk must be manually loaded onto an optical disk driver's tray by an operator, and then the optical disk is carried to a predetermined position by a driving device. The optical disk loading device well known to persons skilled in the computer field.

At the present time, as computers are used in various fields, the computer may be installed horizontally or vertically, wherein peripheral devices in the computer must be fit to operate vertically (upright in one side). In prior optical disk loading devices, a linkage optical disk tray may insert into or remove from an insertion port of the optical disk driver, and another rotary pan which allows an optical disk to rotate thereon is installed on the spindle motor of said system. Said rotary pan contains a magnet, and a clamping piece having a yoke therein arranged above the spindle. After the optical disk is positioned for reading data, the iron piece on the center of the optical disk is pulled by said magnet, thereby fixing the optical disk on the tray in the required position for rotating. However, the conventional linkage tray has no clamping force for holding the optical disks, for example, the conventional optical disk drivers, such as CD player, LD, CD-ROM, etc. are installed horizontally. During loading and unloading operation (i. e. when the optical disk is moved from the insertion port into the optical disk driver and then is loaded onto the spindle rotary pan, and when the optical disk is unloaded from the spindle rotary pan and then is pushed into the insertion port), when using the conventional optical disk driver installed horizontally, the optical disk remains on the prior linkage optical disk tray by the force of gravity and is moved parallelly with said base and horizontally toward the rotary pan position. While the optical disk driver is vertically (upright in one side) installed for use in the conventional design, the optical disk can not be supported by the tray and will be separated from the tray due to gravity, thus, the optical disk can not be loaded or unloaded using the optical disk driver.

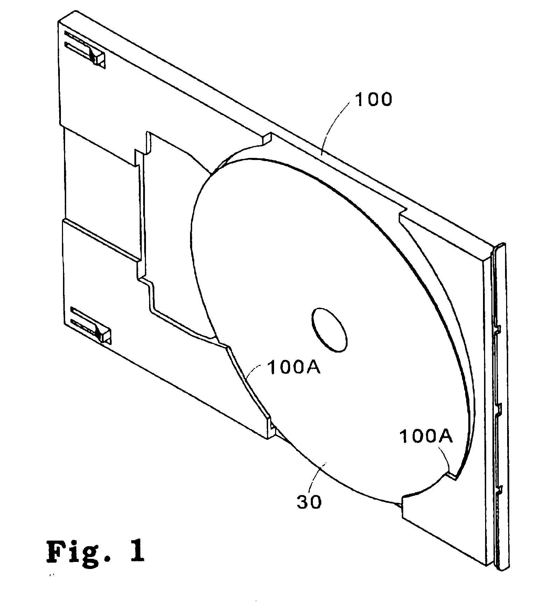

A prior art for successfully loading and unloading optical disks when used to vertically install the optical disk driver is shown in Fig 1. In the prior art, the linkage optical disk tray uses projecting ribs 100A on the periphery of positioning area of an optical disk 30 for preventing the optical disk 30 from tilting. In the technology of such optical disk tray, the optical disk will be loaded into the optical disk driver installed vertically (upright in one side) so that the optical disk will not slide. However, as the optical disk is only supported by the projecting ribs 100A, it will probably vibrate during loading and unloading operations and thus may be in an unstead condition and be inserted at a slant into the optical disk driver (not vertically). This will induce uncertainly in positioning the optical disk on the predetermined position of the rotary pan. Furthermore, if the optical disk tray has the projecting ribe, regardless of how the optical disk is installed vertically (upright in one side) or horizontally, when the optical disk is located on the optical disk tray, a smaller angle is needed to transfer the rim of said optical disk inside the structure of the projecting rib. This is troublesome for an operator. Therefore, the disadvantage of the prior art is that the optical disk can not be steadily loaded into the preset position of the rotary pan.

### 3. The Problem is Solved by the Present Invention

Accordingly, the object of the present invention is to overcome the problem which causes unsuccessful loading and unloading of the optical disk so that the present invention may be steadily loaded into a predetermined position on the rotary pan during loading and unloading operations, and when the optical disk driver is installed horizontally, the optical disk tray of the present invention also provides as easy loading and unloading as that of the conventional art.

### SUMMARY OF THE INVENTION

To solve said problem described hereinabove, when vertically installing said optical disk tray of the present invention onto the optical disk driver, a radially clamping force is applied to the optical disk to encure that the optical disk will be steadily loaded and unloaded and the optical disk is further fixed on the rotary position by the rotary pan having a magnet. When the optical disk driver is installed horizontally, the optical disk tray of the present invention may disable the radially clamping force so as to restore the convenient functions and operations provided by the conventional optical disk tray.

The primary object of the present invention is to provide an optical disk loading method so that when the optical disk driver is vertically (upright in one side) installed, the optical disk will not slide on and shift from the tray during loading and unloading operations.

Another object of the present invention is to provide a disk loading device having a radially clamping force so that during loading and unloading operations, a radially clamping force can be applied to the optical disk and the optical disk will be steadily transferred to the rotary pan.

A further object of the present invention is to provide a disk loading device having the ability to disable the radially clamping force so that when installing the optical disk horizontally, the convenient position ofthe optical disk may be restored.

### BRIEF DESCRIPTION OF THE DRAWINGS

The invention, as well as its many advantages, may be further understood by the following description and drawings:
Fig. 1 is a perspective view of a vertically (upright in one side) installing typical optical disk tray of the prior art;
Fig. 2 is an exploded perspective view of the optical disk tray of the present invention;
Fig. 3 is a top view of the optical disk tray of the present invention;
Fig. 4 is a elevational view of the optical disk tray of the present invention;
Fig. 5 is a cross sectional view of an optical disk carried on the optical disk tray of the present invention, which is along line A-A in Fig. 3;
Fig. 6A is a perspective view showing one side of the clamping arm of the optical disk tray in the present invention;
Fig. 6B is a perspective view showing another side of the clamping arm of the optical disk tray in the present invention;
Fig. 7 shows the forces applied on an optical disk and which is used on the optical disk tray of the present invention;
Fig. 8 is a top view of the base of the optical disk loading means in the prior art;
Fig. 9 is a top view of the base of the optical disk tray with a maximum projecting protion during vertical (upright in one side) installation of the present invention;
Fig. 10 is a further operating condition of Fig. 9 showing a top view of the first contact condition between the clamping arm of the clamping means and the second pillar of the base during the loading of the optical disk;
Fig. 11 is a further operating condition of Fig. 10 showing a top view of the optical disk tray of the present invention being positioned on the base, wherein the radial clamping force has been disabled;
Fig. 12 is a top view showing that the radially clamping force is disabled when the present invention is installed horizontally;
Fig. 13 is another embodiment wherein the optical disk tray has a radial clamping means achieved by a point to point method when the present invention is vertically installed (upright in one side);
Fig. 14 is a schematic view showing the forces applied on the optical disk and which is used in the optical disk tray of the embodiment of Fig. 13.
Fig. 15 is a further embodiment wherein the optical disk tray has a radial clamping means achieved by a face to face method when the present invention is vertically installed (upright in one side);
Fig. 16 is another embodiment showing that the optical disk tray has two clamping means when the present invention is vertically installed (upright in one side);
Fig. 17 is another embodiment showing that the clamping arm is formed on the step wall of the optical disk tray when the present invention is vertically installed (upright in one side);

### DETAILED DESCRIPTION OF THE PREFERRED EMBODIMENT

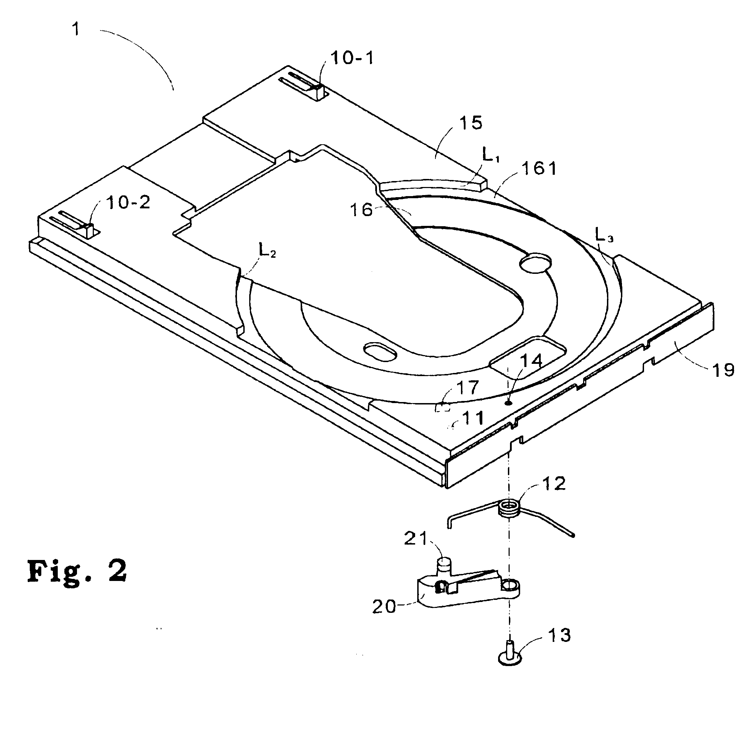

Referring is now made to Fig. 2, which shows an exploded perspective view of an optical disk tray of the present invention. The optical disk tray 1 of the present invention comprises a first surface 15 and a second surface 16, wherein step walls L₁, L₂ and L₃, and carrying surface 161 between said two surfaces form a drop. The forward tab end 19 of the tray 1 is positioned in the same direction as the tab surface of the optical disk driver, while two stoppers 10-1 and 10-2 are arranged on the first surface 15 near another end of the forward tab end 19. In the optical disk tray of the prior art, the carrying surface 161 is located on the surface which contacts with the surface of the optical disk without data recorded thereon in the optical disk positioning area, thereby preventing the data recorded surface of said optical disk from contacting directly with the second surface 16. The second surface 16 of the tray 1 is used for placing the optical disk, and the area formed by said step walls L₁, L₂, and L₃ is slightly larger than that of the optical disk in order to ensure that when the optical disk is rotated on the rotary pan, the rim thereof will not be interfered with by the step walls L₁, L₂ and L₃ which are orthogonal to said first surface 15 and carrying surface 161, and the structure of said optical disk tray is the same as that of conventional optical disk tray. Additionally, the curved radius of at least one of said step walls L₁ forms an arc shape the same as that of the rim of the optical disk.

The optical disk tray of the present invention further comprises a clamping means for providing a radial clamping force onto the rim of the optical disk so as to fix said optical disk in the optical disk positioning area and to make said optical disk vertically loaded into the optical disk driver (upright in one side). Said clamping means comprises a clamping arm 20, a twisting spring 12, a screw 13 and a first pillar 11. After said clamping arm 20 and said twisting spring 12 are combined, they are locked into a screw hole 14 on the back of the tray 1 by said screw 13. The screw 13 is axially connected with said clamping arm 20 so that the rotating movement of said clamping arm 20 will be unaffected, and the clamping portion 21 penetrates said second surface 16 and extends upwards to a notch 17 formed on said step wall L3.

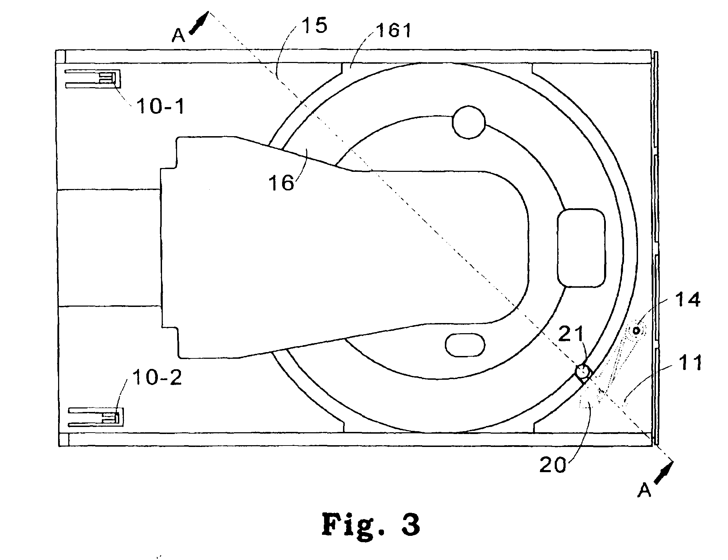

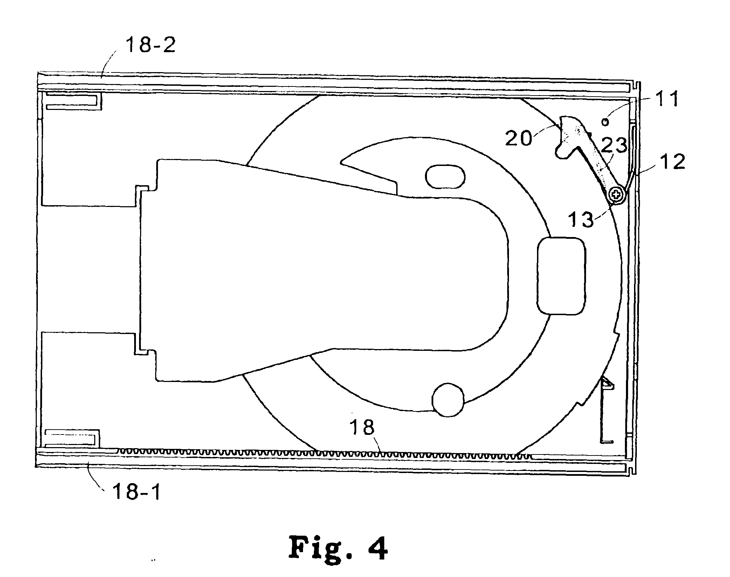

The top view and elevational view of the present invention is shown in Figs. 3 and 4. The first pillar 11 is fixed on the surface housing of the tray 1 and has a specific distance apart from said clamping arm 20 so that when said tray 1 enables the function of the clamping means, the clamping arm 20 and the first pillar 11 will not be interfered with and buckled onto each other. When the clamping arm 20 and said twisting spring 12 are fixed on the rear surface housing of the tray 1, one end of the twisting spring 12 is positioned in a slot 23 of the clamping arm 20, and the other end thereof is rested on the inner side wall of the forward tab end 19. When the optical disk is not placed on the tray 1, the clamping portion 21 of the clamping arm 20 extends outward to the optical disk from said notch 17, as shown in the Figs. 3 and 4. Now referring to Fig. 4 again, a left guiding slot 18-1, a right guiding slot 18-2, and a teeth portion 18 are formed on the rear surface housing of the tray 1. The optical disk tray 1 is driven by a conventional structure to match the driving gear set of the loading system of a base 40 in order to perform the prior loading/unloading operation of the optical disk.

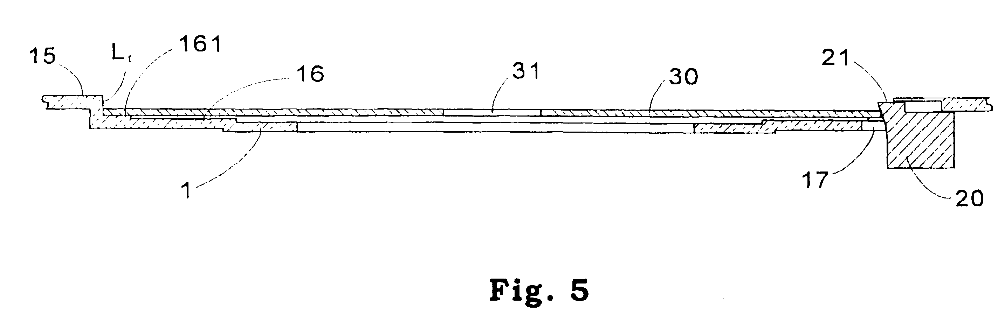

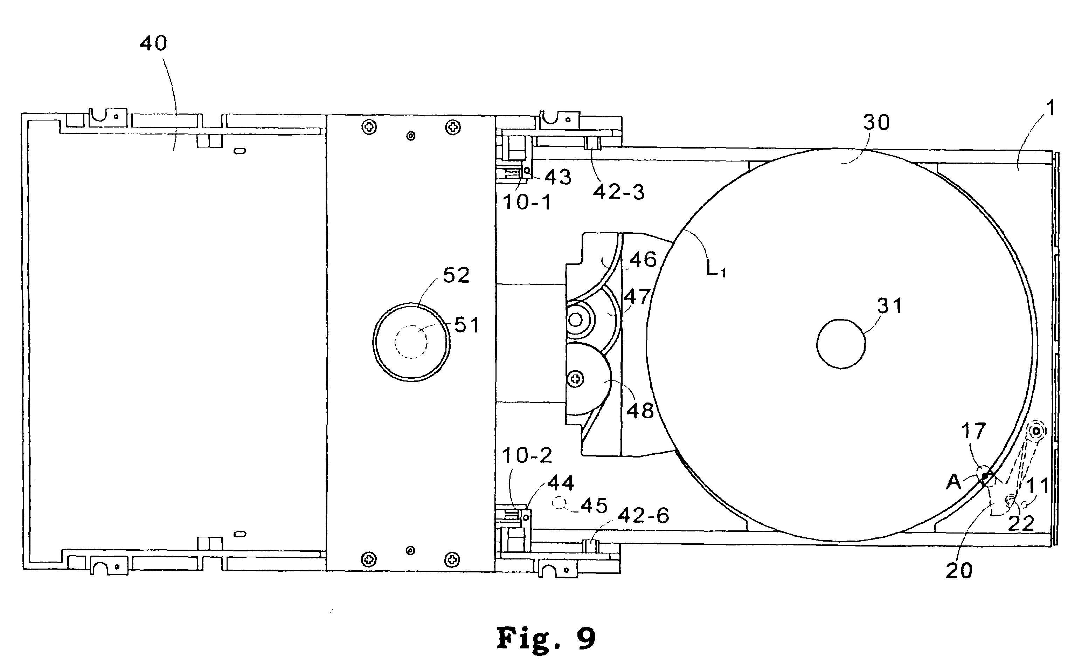

Referring now to Fig. 5, which is a cross section view of the optical disk 30 carried by the optical disk tray 1 of the present invention along the cross section line A-A of Fig. 3, wherein an optical disk in the optical disk positioning area contacts only with a carrying surface 161. Said rim of said optical disk 30 is applied with a radial force by the clamping arm 20 so that the other side thereof rests against the step wall L₁, and the clamping arm 20 is slightly withdrawn from the optical disk positioning area, but the clamping portion 21 remains on said positioning area, and said status may be understood from Fig. 9. Further, in another embodiment as shown in the Fig. 5, the clamping portion 21 of said clamping arm 20 may have a tilting cambered surface on the side contacting said optical disk 31 so that when the clamping portion 21 applies a radial force to the optical disk, the optical disk 30 is also tightly pressect to the carrying surface 161. Thus, the optical disk 30 is steadily positioned.

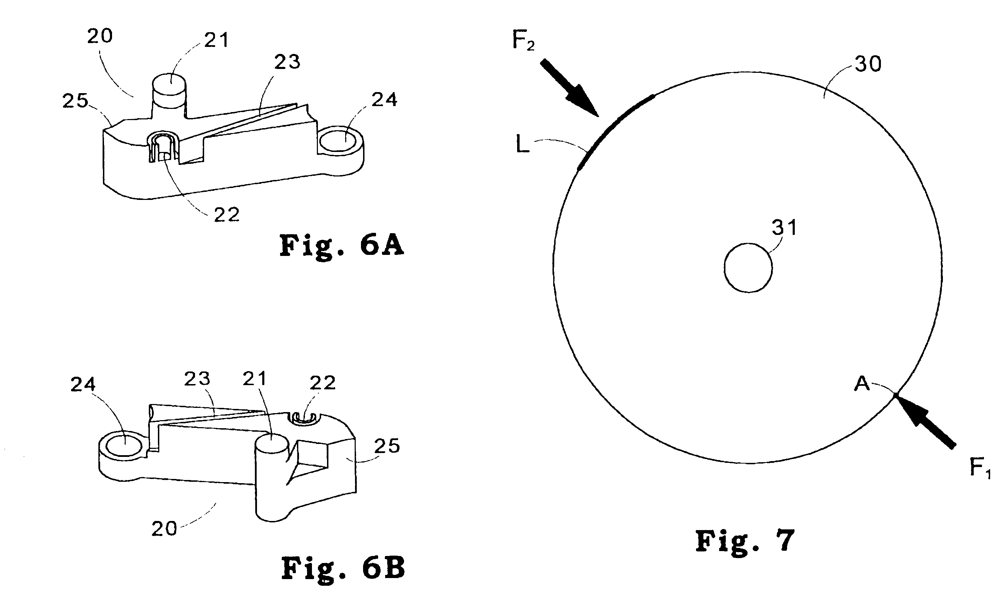

The perspective view of said clamping arm 20 of said clamping means is further shown in the Fig. 6. The clamping arm 20 further forms a clamping portion 21, a flexible mortising slot 22, slot 23, through hole 24 and a tilting surface 25. As shown in Fig. 7, a twisting force is applied on the clamping arm 20 by the twisting spring 12 so that a radial force F₁ is applied on the rim of the optical disk by the clamping portion 21. The flexible mortising slot 22 forming a C shape is used to buckle the first pillar 11, when the optical disk driver is installed in the horizontal arrangement. By manually moving the clamping arm 20, the flexible mortising slot 22 thereof is buckled to the first pillar 11 so that the clamping arm 20 is fixed, thus the clamping portion 21 is moved out of the notch 17 within the first surface 15 and leaves the positioning area of the tray 1. Therefore, the radial clamping force of said clamping means is disabled. The optical disk 30 is horizontally arranged on the optical disk driver which is horizontally installed as in the prior art. The slot 23 of the clamping portion 20 provides for positioning the one end of twisting spring 12 to steadily combine the clamping arm 20 with the spring 12, and the screw 13 which penetrates the through hole 24 is provided as the rotary axle of the clamping arm 20. When the radial force is enabled by the clamping means, the tilting surface 25 of the clamping arm 20 is used to match the second pillar 45 so that the radial clamping force is disabled. Thus the optical disk is easily loaded into the rotary pan. The enabled condition will be described hereinafter.

Referring now to Figs. 7 and 9. When the optical disk 30 is placed on the optical disk positioning area of the tray 1, the clamping arm 20 pushes the optical disk 30 onto the step wall L₁ on the point A which is at the front rim of the clamping portion 21, by the twisting force of the twisting spring 12. As described hereinbefore, as the radial curvature of the step wall L₁ is the same as that of the circumference of the optical disk, they both may be tightly engaged. Therefore, when a radial force F₁ is applied to the optical disk 30 on the point A by the clamping means, the force will be transmitted through the center of the optical disk 30 so as to generate a uniform reacting force F₂ on the step wall L₁, thus the rim of the optical disk 30 is tightly adhered to the step wall L₁, and the optical disk 30 may be steadily clamped onto the optical disk positioning area of the tray 1 by said radius force F₁ and said reacting force F₂. As shown in Fig. 7, the acting force F₁ and reacting force F₂ are applied to the optical disk positioning area of the optical disk 30. In Fig. 7, the wide solid line L represents the rim of the optical disk 30, and a reacting force F₂ is applied to the step wall L₁.

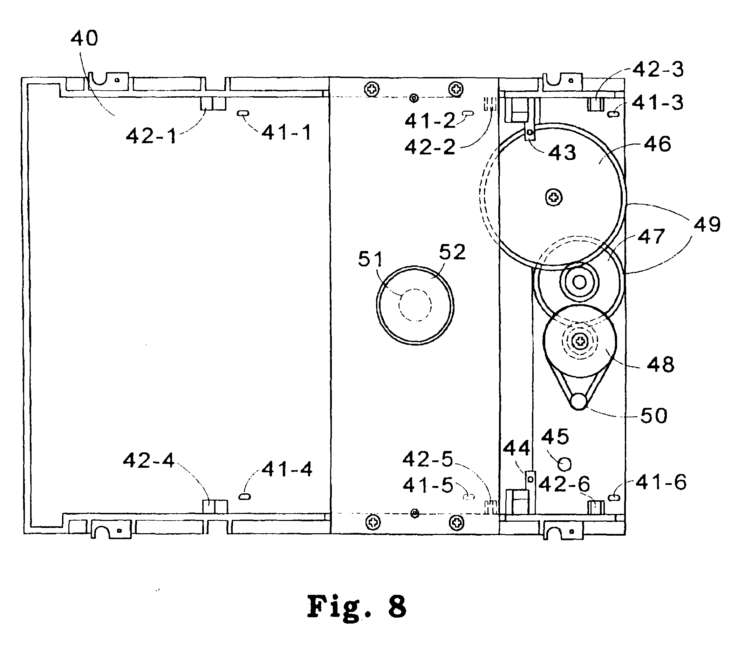

Fig. 8 shows the elevational view of the base 40 of the conventional optical disk driver, wherein the optical disk tray 1 is omitted. The base 40 of the optical disk driver generally uses optical machine modules, a spindle motor and a conventional optical disk loading and unloading system, and a rotary pan 51 is arranged on the axle of the spindle motor. Left guiding blocks 41-1 to 41-3, right guiding blocks 41-4 to 41-6, left guiding pieces 42-1 to 42-3, and right guiding pieces 42-4 to 42-6 are formed on the housing of the base 40. The structures of said guiding blocks and said guiding pieces can be operated with said left and right guiding slots 18-1 and 18-2, so that the movement ofthe tray 1 through the optical disk driver is a linear displacement, and left and right stopping bars 44 and 43 are installed in a proper position. A set of driving gears are arranged on the base 40, which comprises a first gear 46, a second gear 47 and a third gear 48, while said three gears are interconnected by the teeth portions 49, as shown in Fig. 8. The gears are driven to rotation by a driving motor 50. The teeth portion 49 of the first gear 46 is interconnected with the teeth portion 18 of the tray 1, so that the tray 1 may input and output the optical disk driver. The present invention further provides a second pillar 45 at a specific position of the base 40 ( the a fixing body of the optical disk, such as outer housing). The relation between the second pillar 45 and the clamping means of the tray 1 will be descripbed hereinafter.

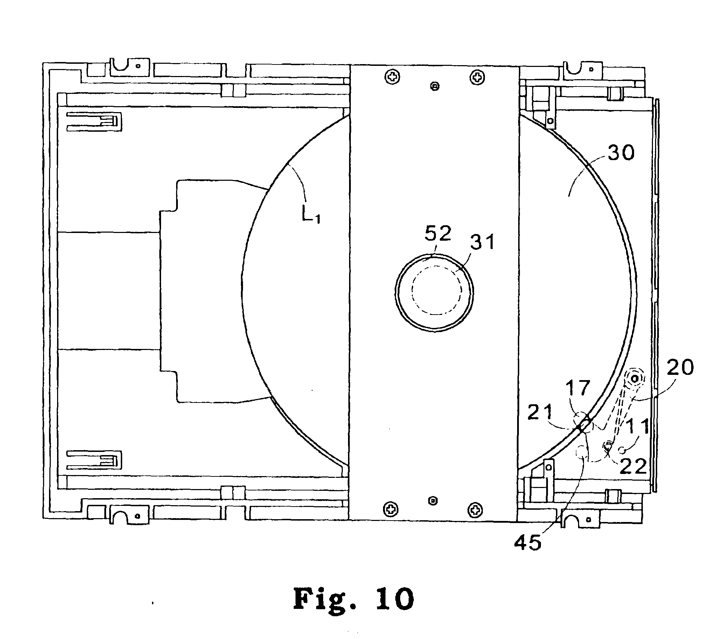

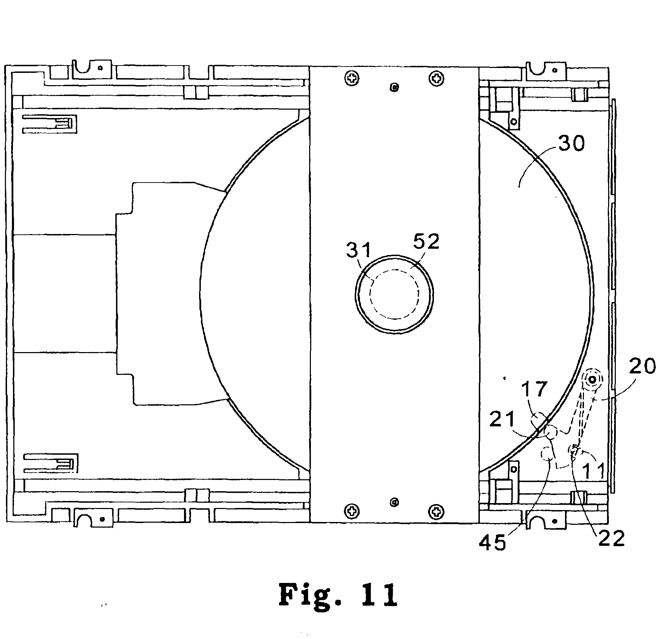

Now referring to the subsequent Figs 9, 10 and 11, wherein Fig. 9 shows a carrying optical disk driver which is in the maximum extended position mounted on the base 40. Therefore, the left and right stopping portions 10-2, 10-1 and 43 are resisted by the left and right stopping bars 44 and 43, respectively, and the gear portion 49 of the first gear 46 is interconnected with the gear portion 18 of the tray 1. When the optical disk 30 is located by an operator, the clamping arm 20 which is projected from the notch 17 of the clamping portion 21 is pushed away by using the rim of the optical disk 30 (or by hand) for placing said optical disk 30. Then, said front rim A of said clamping portion 21 of the clamping arm 20 will apply a radial clamping force on the optical disk 30 (please refer to the aforementioned description at Fig. 7), thereby shifting the position of the clamping arm 20 to the outside of the step wall L₃. Than, as the tray has not borne the optical disk, but the front rim of the clamping portion 21 is still projected from the inside of the step wall L3 (i. e. the optical disk positioning section), and the flexible mortising slot 22 of the clamping arm 20 is apart from the first pillar. When the optical disk is loaded by the optical disk driver, the set of gears is driven by a driving motor 50, and then the tray is put into the optical disk driver by the interconnection of the gear portion 49 of the first gear 46 and the tray 1. During loading, as the optical disk 30 is confined by a radially clamping force on the tray 1, it can steadily move fonvard to a rotary disk 51 in the direction parallel to the base 40. Fig. 10 shows the relative position as the tilting surface 25 first contactes the second pillar 45. In Figs. 9 and 10, the relative positions of the clamping arm 20 and the first pillar 11 are the same. When the tray 11 moves continuously, the center hole 41 of the optical disk 30 is also continuously moved toward the rotary disk 51. Because the second pillar 45 is fixed on the base 40, the tilting surface 25 on the clamping arm 20 of clamping means of the tray 1 will contact the second pillar 45 in order that the clamping arm 20 is shifted outward from the stepped wall L₃, as shown in Fig. 11. When the tray 1 is completely pushed into the base 40, the front rim of the clamping portion 21 escapes the rim of the optical disk 30 and completely backs away from the optical disk positioning area so as to not interrupt the rotation of the optical disk. Therefore, the optical disk 30 is never confined by the clamping means, but the side surface of the optical disk 30 will be confined by the clamping piece 52, and the lower rim of the optical disk 30 is supported by the step walls L₂ and L₃ of the tray 1. Thus, the optical disk 30 will not escape the tray 1 and is steadily adhered to the optical disk positioning area. Then, an optical machine module will move nearby the loading position, and the clamp piece 52 will be mutually attracted to the rotary pan 51 so that the optical disk 30 can be fixed on the rotary pan 51, so as to finish the loading of the optical disk, as shown in the Fig. 11. The time for disabling said radial force is almost the same time as tha of the optical disk loaded by that for rotary pan 51.

Referring to Fig. 11 continuously, after said optical disk 30 is fixed on the rotary pan 51, the rim of the optical disk 30 will not be interfere with by the step walls L₁, L₂ and L₃ when rotating. Meanwhile, after the tray 1 is loaded into a predetermined position, the relative positions of the second pillar 45, the clamping arm 20 and the first pillar 11 must be taken into consideration. Then, the position of the second pillar 45 as fixedly on the base 40 is exactly sufficient for the clamping portion 21 of the clamping arm 20 being pushed away from the optical disk positioning area, while the position of the clamping arm 20 will induce that the flexible mortising slot 22 is buckled with the first pillar 11 on the rear surface of the tray 1. That is to say, when the optical disk driver is unloading the optical disk, the radial clamping force applied on the optical disk 30 may still be restored by the clamping arm 20 through the twisting spring.

When the eject button is pushed, the optical disk module is dropped out from the loading position, the rotary pan 51 of the spindle motor is separated form the optical disk 30 and the optical disk 30 is confined by said clamping means so that it can not escape from the tray 1. At the same time, the radially clamping force will be restored by the clamping means in a reverse order respective to said loading process, and will successfully move the tray 1 back to a maximum protrudent distance, as shown in Fig. 9. For the sake of simplicty, the unloading process will be omitted.

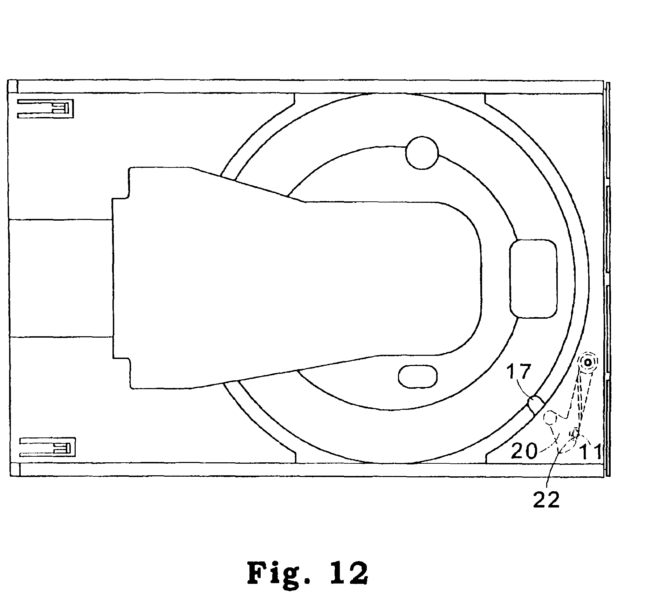

Referring now to Fig. 12, which shows the disabled condition of the clamping means of the tray 1. When an optical disk is horizontally installed, the operator may manually shift the clamping arm 20 toward the pillar 11 until the flexible mortising slot 22 is buckled with the first pillar 11, and said buckling condition will not be released by the twisting force of the twisting spring. Therefore, the optical disk tray 1 will load or unload the optical disk by using a conventional method. When an optical disk driver is vertically installed, the user may manually release said buckling condition, so as to disable the radially clamping force.

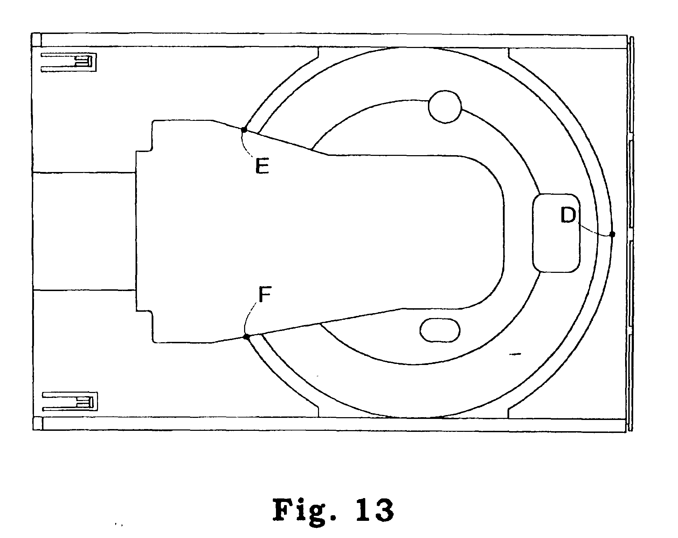

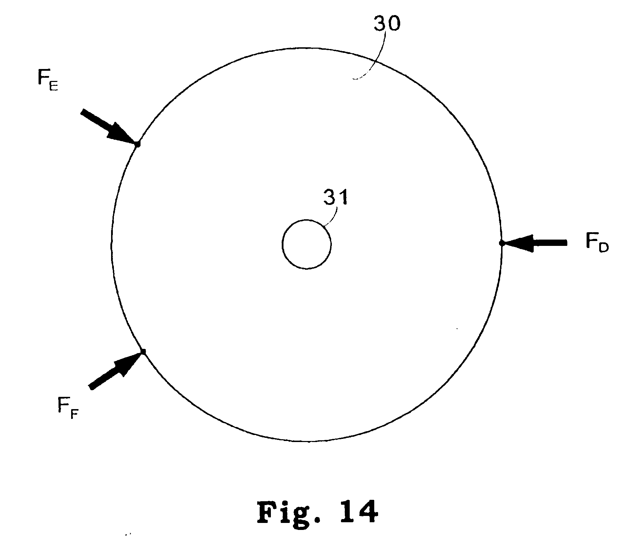

In the above embodiment, the optical disk is radially clamped by using a point to surface applied force. In Fig. 13, another clamping method of the tray in the optical disk by point to point applied force is shown. The point to point clamping method means that the force is applied to the optical disk, but doed not mean that the force is applied to the two points. When the optical disk is upright, if the force is only applied to two points, the optical disk may be rotated and thus be unsteady. If the optical disk should be clamped steadily, it is necessary to clamp the optical disk at at least three points. In Fig. 14, said clamping arm 20 is arranged on the point D in order that the forces applied to the optical disk 30 are shown in Fig. 14. A radial force F_{D} is applied to the optical disk 30 at point D and then said optical disk 30 is pushed to the step walls L₁ and L₂ so that the two reacting forces F_{*E*} and F_{*F*} are reacted on the points F and E. Therefore, three radial forces are balanced at points D, E and F and thus the optical disk 30 is fixed on the tray, wherein rubber may be adhered on the points E and F for enhancing the reliability of the clamping means.

Furthermore, in another embodiment, when the clamping arm 20 arranged on the point D is at the clamping portion with a cambered surface, a radial force with "surface" type may be applied to the optical disk, and the optical disk still derives a reacting force F_{*E*} and F_{*F*} at points E and F, respectively. Therefore, a surface to point radial clamping may be performed. The radius of the curvature of said cambered surface of said clamping portion may be the same as the rim of the optical disk so that they can be tightly contacted.

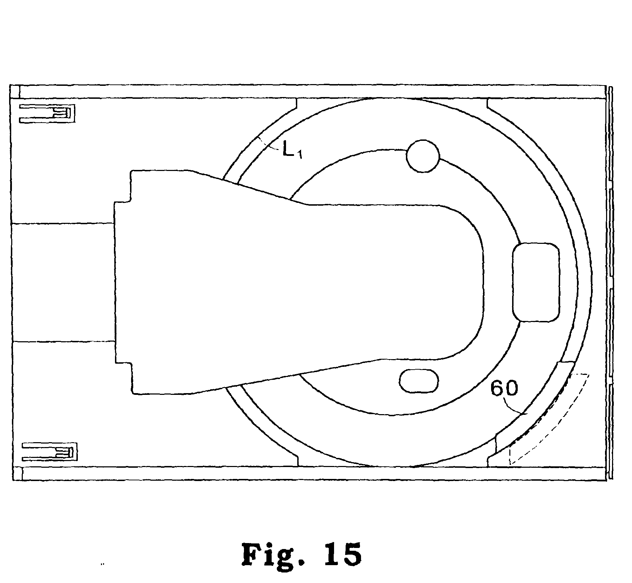

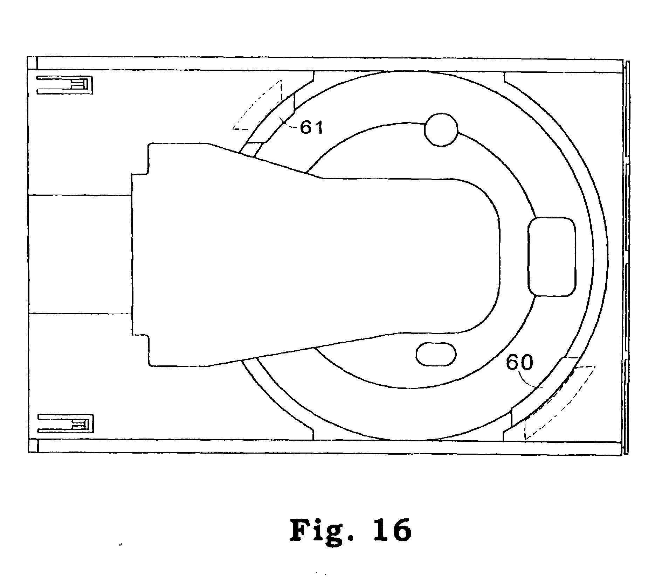

Additionally, the radial force may be applied using a surface to surface method. Referring now to Fig. 15, the radial clamping of the tray 1 may be substituted by the clamping means 60 of cambered surface. When the optical disk is placed on the tray, a radial acting force may be applied thereto by a surface of the cambered surface clamping means. This is an embodiment of radial clamping by acting and reacting forces. Referring to Fig. 16, two or more than two radial clamping means are arranged in a proper position of the tray 1. In Fig. 16, the radial means 60 and 61 may apply radial acting forces to the optical disk simultaneously to clamp the optical disk. This is an embodiment of radial clamping by using mutually cancelled acting forces. Similarly, the radius of curvature of said optical disk is not confined by the above embodiment and the surface thereof may be treated by rubber for improving the reliability of the clamping means.

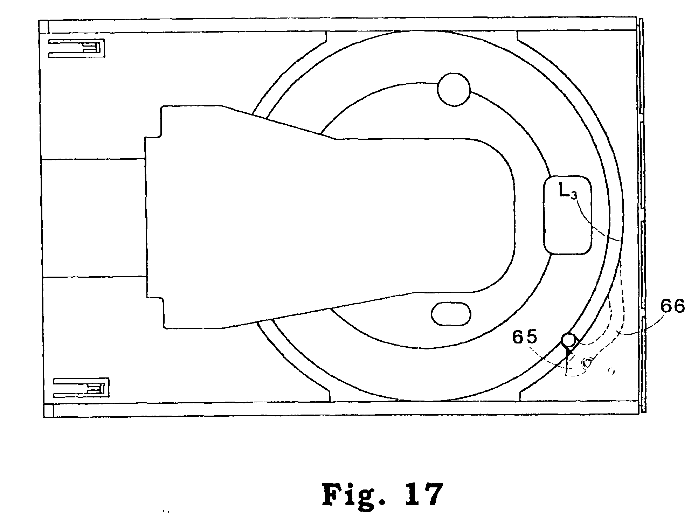

In addition to the different clamping methods shown in the above embodiments, another embodimcnt is shown in Fig. 17. A clamping arm 65 having a flexing portion 66 is directly formed on step wall L₃ of said tray 1. This clamping method may provide a point to surface radial clamping method as shown in the above embodiment.

### Results of the present invention

The disk loading mcans according to the present invention will make the optical disk driver being installed horizontally or vertically, thus the appended worth of the optical disk is increased and the market competition ability is also promoted. In the loading means of the present invention, when the optical disk driver is vertically installed, the radius force thereof is at least applied to the two opposite rims of the optical disk so as to fix said optical disk so that when the optical disk moves into or withdraws from the optical disk driver along a parallel direction to the base. When the optical disk is parallelly arranged, the operator may manually disable the radial force, and the clamping means of the tray restores the conventional loading action.

While this invention has been described in detail with reference to its preferred embodiments, it should be appreciated that the present invention is not limited thereto. Rather, in view of the present disclosure, they would present themself to those skillful in the art without departing from the scope and spirit of this invention. Accordingly, the invention is disclosed and is intended to be limited only by the scope of the appended claims.

## Claims

1. A disk loading device for an optical disk driver mainly comprising a tray and a base for loading said tray, a first surface and a positioning area for arranging said optical disk being formed on said tray, a step wall structure being formed between the first surface and the positioning area, is characterized in that:
at least a clamping means is installed on said tray, said clamping means comprising a clamping arm having a clamping portion and an elastic device, wherein the clamping portion provides a radial force on the optical disk of said tray by said elastic device applied to the clamping arm and a reacting force on the optical disk because of said radial force applied to said step wall, thereby the optical disk is fixedly clamped by said radial and reacting forces.

2. A disk loading device for an optical disk driver mainly comprising a tray and a base for loading said tray, a first surface and a positioning area for arranging said optical disk being formed on said tray, is charactenzed in that:
at least two clamping means are installed on said tray, said clamping means comprising a clamping arm having a clamping portion and an elastic device, wherein the clamping portion applies a radial force to the optical disk of said tray by the elastic device applied to the clamping arm, thereby the optical disk is fixedly clamped by said radial force.

3. A disk loading device for an optical disk driver mainly comprising a tray and a base for loading said tray, a first surface and a positioning area for arranging said optical disk being formed on said tray, a step wall structure being formed between the first surface and the positioning section, is characterized in that:
at least a clamping means is installed on said tray, said clamping means comprising a clamping arm having a clamping portion, wherein the clamping portion applies a radius force to the optical disk on the tray by the flexible action of the clamping means and a reacting force is applied to the optical disk by the action of radial force, thereby said optical disk is fixedly clamped by using said radial and reacting forces.

4. The disk loading device for an optical disk driver as claimed in claims 1, 2 or 3, further comprising a pillar with respect to said clamping means, when said tray is completely loaded into the base, the radial force is disabled and the optical disk is driven to rotate because said pillar enables the clamping arm of said clamping means.

5. The disk loading device for an optical disk driver as claimed in claim 4, wherein said pillar is arranged on the fixing body of said optical disk driver.

6. The disk loading device for an optical disk driver as claimed in claims 1, 2 or 3, wherein said tray further comprises a disabling means which is used to disable the elastic property of the elastic device for preventing the radial force generated by said clamping means from applying on the optical disk.

7. The disk loading device for an optical disk driver as claimed in claim 6, wherein said disabling means comprises a pillar and said clamping means further comprises a flexible mortising slot, said flexible mortising slot is buckled with said pillar so that the elastic device is disabled to prevent the radial force generated by said clamping means from applying on the optical disk.

8. The disk loading device for an optical disk driver as claimed in claims 1 or 3, wherein the radius of curvatures of step walls are the same as that of the circumference of the optical disk for tightly contacting therebetween in a radially clamping condition.

9. The disk loading device for an optical disk driver as claimed in claims 1, 2 or 3, wherein rubber may be used to treat the surface of said structure portion of said step walls contacting said optical disk driver to increase the stability of the radial clamping.

10. The disk loading device for an optical disk driver as claimed in claim 8, wherein rubber may be used to treat the surface of said structure portion of said step walls contacting said optical disk driver to increase the stability of the radial clamping.

11. The disk loading device for an optical disk driver as claimed in claims 1, 2 or 3, wherein rubber may be used to treat the surface of said structure portion of said step walls contacting said optical disk driver to increase the stability of the radial clamping.

12. The disk loading device for an optical disk driver as claimed in claims 1, 2 or 3, wherein said clamping portion of said clamping arm may be formed as a cambered surface to provide a surface radially clamping force to the optical disk.

13. The disk loading device for an optical disk driver as claimed in claims 1, 2 or 3, wherein said clamping portion of said clamping arm may be formed as a cylinder to provide a surface radially clamping force to the optical disk.
